# EUROPÄISCHE PATENTSCHRIFT

(11) **EP 2 662 605 B1**
(45) Veröffentlichungstag und Bekanntmachung des Hinweises auf die Patenterteilung: **03.07.2019**
(21) Anmeldenummer: 13002371.6
(22) Anmeldetag: 03.05.2013
(51) Int. Cl.: F16L 55/26, G01B 5/20, G01B 7/28, E21B 47/024

(54) **System zur Erfassung eines Querschnittsprofils**
System for recording a cross-section profile
Système de détection d'un profil transversal

(30) Priorität: 09.05.2012 DE 102012009347
(43) Veröffentlichungstag der Anmeldung: 13.11.2013
(73) Patentinhaber: Eisenmann SE, 71032 Böblingen (DE)
(72) Erfinder: Tietze, Frank, D-72160 Horb (DE)
(74) Vertreter: Ostertag & Partner Patentanwälte mbB

(56) Entgegenhaltungen:
- EP-A1- 0 398 457
- EP-A1- 0 666 448
- DE-A1- 3 719 492
- DE-A1- 10 257 058
- DE-B3-102005 016 631
- GB-A- 2 088 554
- GB-A- 2 332 274
- JP-A- H03 140 606
- US-A1- 2011 095 752

## Beschreibung

Die Erfindung betrifft ein System zur Erfassung eines Querschnittsprofils der Innenmantelfläche einer Fluidleitung mit einer Detektoreinheit.

Mit Hilfe solcher vom Markt her bekannten Systeme werden beispielsweise der bauliche Zustand der Innenmantelfläche von Fluidleitungen überprüft, über welche Behandlungs- oder Beschichtungsmedien zu einer Applikationseinrichtung für diese Medien gefördert werden. Eine Überprüfung der Innenmantelfläche von Fluidleitungen ist von Zeit zu Zeit aus Wartungsgründen und im Hinblick auf eine Qualitätssicherung geboten. Insbesondere bei Applikationssystemen, die auf die an und für sich bekannte Molchtechnik zurückgreifen, ist der Zustand der Innenmantelfläche der Fluidleitung wichtig, um ein dichtes Anliegen der verwendeten Molche gegen die Innenmantelfläche sicherzustellen.

Ansonsten kann es im Laufe der Zeit über einen Abschnitt des Schlauches in Längsrichtung zu Lackablagerungen kommen, wodurch eine elektrisch leitende Verbindung entstehen kann, die bei elektrostatisch betriebenen Applikationsvorrichtungen aus Explosionsschutzgründen unbedingt vermieden werden muss.

Als Prüfsysteme haben sich hierfür insbesondere Systeme der eingangs genannten Art etabliert, deren Detektoreinheit als Röntgeneinheit ausgebildet ist, mit deren Hilfe die zu überprüfende Fluidleitung durchleuchtet werden kann. Der apparative Aufwand ist bei solchen Röntgensystemen jedoch sehr hoch und die Systeme sind verhältnismäßig komplex und sperrig.

Die Dokumente DE 102 57 058 A1, GB 2 332 274 A und EP 0 666 448 beschreiben Prüfsysteme mit einem molchartigen Fahrzeug.

Es ist Aufgabe der vorliegenenden Erfindung, ein System zu schaffen, das die Vermessung einer noch nicht verbauten Fluidleitung ermöglicht.

Diese Aufgabe wird mit einem System nach Anspruch 1 gelöst. Erfindungsgemäß weist das System zur Erfassung eines Querschnittsprofils der Innenmantelfläche einer Fluidleitung eine Detektoreinheit auf, wobei die Detektoreinheit:
a) nach Art eines Molches ausgebildet ist, so dass die Detektoreinheit innerhalb der Fluidleitung relativ zu deren Innenmantelfläche bewegbar ist;
b) eine Bezugsachse definiert;
c) eine Sensoreinrichtung aufweist, wobei die Detektoreinheit eingerichtet ist, um die Sensoreinrichtung mit sich zu führen, wobei durch die Sensoreinrichtung der Abstand zwischen der Innenmantelfläche der Fluidleitung und der Bezugsachse in einer oder mehreren Richtungen radial zur Bezugsachse erfassbar ist.
   Das System weist auch erfindungsgemäß
d) Fördermittel auf, mittels welchen die Fluidleitung in ihrer Längsrichtung bewegbar ist.
   Das System weist auch erfindungsgemäß
e) eine Positioniereinrichtung auf, durch welche die Detektoreinheit im Inneren der Fluidleitung in einer weitgehend stationären Lage haltbar ist, während die Fluidleitung gegenüber der Detektoreinheit bewegt wird.

Die Detektoreinheit kann als Molch und in der Art wie ein Molch, beispielsweise mittels eines Schubmediums, durch die zu überprüfende Fluidleitung hindurch bewegt werden, wobei die Detektoreinheit bei ihrer Bewegung durch die Fluidleitung hindurch Abstände zwischen der Innenmantelfläche und der Bezugsachse erfasst. Aus diesen Abständen kann dann über die Messtrecke hinweg ein Querschnittsprofil berechnet werden.

Die Bezugsachse ist vorzugsweise die Längsachse der Detektoreinheit oder eine Achse, die parallel zur Längsachse der Detektoreinheit ist. Wenn die Detektoreinheit im Inneren der Fluidleitung angeordnet ist, ist diese Bezugsachse dann koaxial oder parallel zur Längsachse der Fluidleitung. Wenn die Detektoreinheit sich in einem gekrümmten Abschnitt der Fluidleitung befindet, ist die Bezugsachse dann koaxial oder parallel zur Achse des zu vermessenden Querschnitts der Fluidleitung.

Vom technischen Aufbau her ist es günstig, wenn die Sensoreinrichtung wenigstens einen taktilen Drucksensor umfasst, welcher mit der Innenmantelfläche der Fluidleitung zusammenarbeitet. Mit einem solchen Drucksensor wird die Innenmantelfläche der Fluidleitung gleichsam abgefahren und Unebenheiten erfasst.

Dabei ist es vorteilhaft, wenn der Drucksensor ein piezoelektrischer Drucksensor oder ein kapazitiver Drucksensor oder ein induktiver Drucksensor ist.

Alternativ oder ergänzend kann die Sensoreinrichtung jedoch auch wenigstens einen berührungslos arbeitenden Abstandssensor umfassen.

Hierbei können gute Messergebnisse erzielt werden, wenn der berührungslos arbeitende Abstandssensor ein Ultraschallsensor ist.

Es ist wichtig, dass die Detektoreinheit bei ihrer Bewegung durch die Fluidleitung hindurch nicht verkippt oder verkantet. Daher ist es günstig, wenn die Detektoreinheit wenigstens einen Stabilisierungsabschnitt umfasst, mittels welchem die Detektoreinheit im Inneren der Fluidleitung grundsätzlich koaxial zum Querschnitt der Fluidleitung an einem Messort positionierbar ist.

Vorzugsweise sind hierzu im Stabilisierungsabschnitt Stabilisatoren vorgesehen, die in Umfangsrichtung gleichmäßig verteilt sind und jeweils in gleichem Maße aus einem Gehäuse der Detektoreinheit hervorstehen.

Die Stabilisatoren sind bevorzugt als elastomere Gleitstücke oder als federgelagerte Pressrollen oder als umlaufende Führungslippen ausgebildet.

Eine kompakte Detektoreinheit kann dann ausgebildet sein, wenn die Sensoreinrichtung in einem Detektorabschnitt der Detektoreinheit angeordnet ist, welcher mit dem wenigstens einen Stabilisierungsabschnitt von einem Gehäuse umfasst ist.

Dem Wunsch nach einer guten Kurvengängigkeit der Detektoreinheit wird besonders dann Rechnung getragen, wenn die Sensoreinrichtung in einem Detektorabschnitt der Detektoreinheit angeordnet ist, welcher gelenkig mit dem wenigstens einen Stabilisierungsabschnitt verbunden ist, der seinerseits als Stabilisierungskörper ausgebildet ist.

Vorzugsweise sind Ausgangssignale der Sensoreinrichtung mittels einer von der Detektoreinheit mitgeführten Sendeeinheit drahtlos an eine Empfangseinheit übertragbar, die außerhalb der Fluidleitung anordenbar ist. Auf diese Weise ist eine unkomplizierte Datenübertragung gewährleistet.

Um eine noch nicht verbaute Fluidleitung, beispielsweise nach der Produktion der Leitung im Rahmen einer Qualitätssicherung, vermessen zu können, umfasst erfindungsgemäß das System Fördermittel, mittels welchen die Fluidleitung in ihrer Längsrichtung bewegbar ist, und eine Positioniereinrichtung aufweist, durch welche die Detektoreinheit im Inneren der Fluidleitung in einer weitgehend stationären Lage haltbar ist, während die Fluidleitung gegenüber der Detektoreinheit bewegt wird. Hierbei kann sich die Detektoreinheit mit einem gewissen Spielraum in Längsrichtung der Fluidleitung bewegen, bleibt jedoch im Großen und Ganzen in einer stationären Position.

Hierfür ist es vorteilhaft, wenn die Positioniereinrichtung wenigstens eine außerhalb der Fluidleitung anordenbare Magnetanordnung und die Detektoreinheit hierzu Gegenmagnete umfasst. Somit wird die Detektoreinheit durch Magnetkräfte in Position gehalten.

Dabei kann die Magnetanordnung der Positioniereinrichtung Permanentmagnete umfassen, welche in Umfangsrichtung der Fluidleitung angeordnet sind. Hierzu zählt auch, wenn die Magnetanordnung einen Ringmagneten umfasst, durch den die Fluidleitung hindurch geführt wird.

Eine besonders gute Haltewirkung für die Detektoreinheit wird erreicht, wenn die Permanentmagnete derart angeordnet sind, dass ihre freie Wirkfläche entgegen der Längsrichtung der Fluidleitung geneigt ist.

Nachstehend werden Ausführungsbeispiele der Erfindung anhand der beigefügten Zeichnungen näher erläutert. In diesen zeigen:
- Figur 1: eine molchartige Detektoreinheit, die in einer Fluidleitung angeordnet ist;
- Figur 2: einen Teilschnitt der Detektoreinheit nach Figur 1;
- Figur 3: eine molchartige Detektoreinheit in der Fluidleitung;
- Figur 4: eine molchartige Detektoreinheit in der Fluidleitung;
- Figur 5: eine Vorrichtung zur Erfassung des Querschnittsprofils der Fluidleitung, wobei beispielhaft die Detektoreinheiten nach Figur 4 in der Fluidleitung gezeigt sind;
- Figur 6: eine abgewandelte Vorrichtung zur Erfassung des Querschnittsprofils der Fluidleitung, wobei eine Detektoreinheit gemäß einem Ausführungsbeispiel verwendet wird;
- Figur 7: eine Detailansicht der Vorrichtung nach Figur 6 in vergrößertem Maßstab.

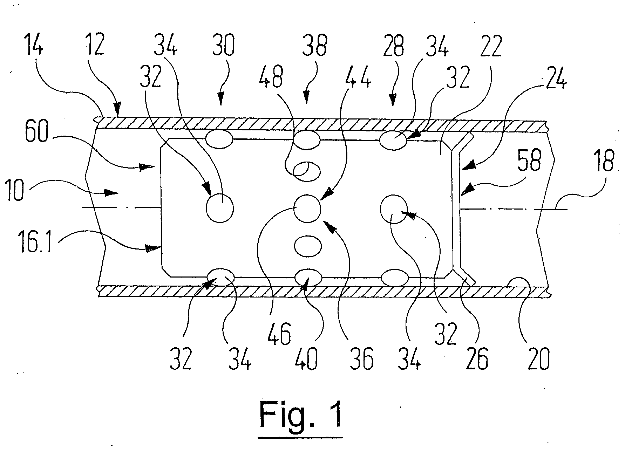

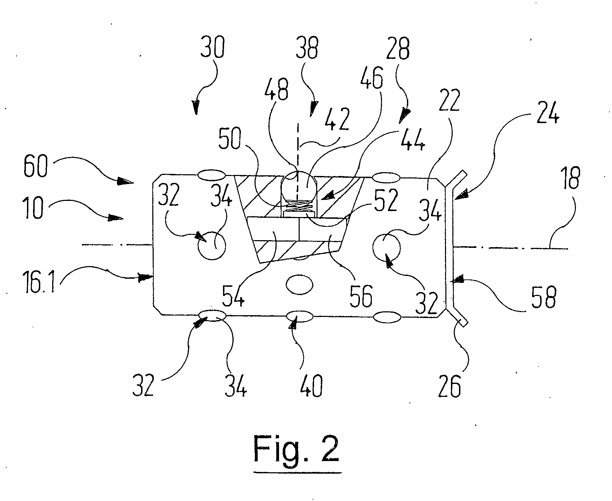

Zunächst wird auf die Figuren 1 und 2 Bezug genommen. Dort ist eine Detektoreinheit 10 gezeigt, die in Figur 1 in einer Fluidleitung 12 angeordnet ist. Als Beispiel für eine Fluidleitung 12 ist hier ein flexibler Schlauch 14 gezeigt, wie er beispielsweise zur Förderung von Lack zu einer Applikationsvorrichtung verwendet wird. Bei der Fluidleitung 12 kann es sich jedoch auch um ein starres Rohr oder um eine Leitung handeln, die starre und flexible Abschnitte umfasst.

Die Detektoreinheit 10 ist nach Art eines Molches und beim vorliegenden ersten Ausführungsbeispiel als Detektormolch 16.1 ausgebildet, welcher rotationssymmetrisch zu seiner Längsachse 18 ist. Der Detektormolch 16.1 kann innerhalb des Schlauches 14 entlang dessen Innenmantelfläche 20 bewegt werden; hierauf wird weiter unten nochmals eingegangen.

Der Detektormolch 16.1 umfasst ein Gehäuse 22, bei dem an einer ersten Stirnseite 24 eine umlaufende Dichtlippe 26 angebracht ist, die koaxial zur Längsachse 18 des Detektormolches 16.1 verläuft und dichtend gegen die Innenmantelfläche 20 des Schlauchs 14 anliegen kann.

Das Gehäuse 22 des Detektormolches 16.1 weist zwei Stabilisierungsabschnitte 28 und 30 auf, die sich in gegenüberliegenden Endbereichen des Gehäuses 22 befinden und in denen in Umfangsrichtung gleichmäßig verteilte Stabilisatoren 32 jeweils in gleichem Maße aus dem Gehäuse 22 hervorstehen. In jedem Stabilisierungsabschnitt 28, 30 sind sechs Stabilisatoren 32 vorhanden, wobei nicht alle Stabilisatoren 32 ein Bezugszeichen tragen. Das Gehäuse 22 und die Stabilisatoren 32 sind in ihren Dimensionen so an den vorgegebenen Durchmesser des Schlauches 14 angepasst, dass die Stabilisatoren 32 gegen die Innenmantelfläche 20 des Schlauches 14 andrücken können, wodurch der Detektormolch 16.1 grundsätzlich koaxial zum Schlauchquerschnitt an einem Messort positioniert ist. Die Stabilisatoren 32 können mit einem gewissen Spielraum in der Weise in radialer Richtung bewegt werden, dass sich ihre Kontaktfläche zur Innenmantelfläche 20 des Schlauchs 14 bei einer Querschnittsverengung oder Querschnittserweiterung des Schlauches 14 auf das Gehäuse 22 zu oder von diesem weg bewegen können. Hierzu sind die Stabilisatoren 32 als Gleitstücke 34 aus einem elastomeren Material ausgebildet. Bei einer nicht eigens gezeigten Abwandlung können die Stabilisatoren 32 auch als federgelagerte Pressrollen ausgebildet sein, die dann an der Innenmantelfläche 20 des Schlauches 14 abrollen.

Der Detektormolch 16.1 führt eine Sensoreinrichtung 36 mit sich, durch welche der Abstand zwischen der Innenmantelfläche 20 des Schlauches 14 und der Längsachse 18 des Detektormolches 16.1 in mehreren Richtungen radial zur Längsachse 18 erfassbar ist.

Hierzu sind in einem Detektorabschnitt 38 des Detektormolches 16.1, der sich zwischen dessen beiden Stabilisierungsabschnitten 28, 30 befindet, mehrere Sensoreinheiten 40 in Umfangsrichtung gleichmäßig verteilt angeordnet, wobei jede Sensoreinheit 40 eine dieser zugehörige Messachse 42 definiert, die radial zur Längsachse 18 des Detektormolches 16.1 verläuft und entlang welcher die jeweilige Sensoreinheit 40 den Abstand zwischen der Innenmantelfläche 20 des Schlauches 14 und der Längsachse 18 des Detektormolches 16.1 erfassen kann. Von den Messachsen 42 ist nur eine einzige in Figur 2 gezeigt.

Beim vorliegenden Ausführungsbeispiel sind die Sensoreinheiten 40 als taktile Drucksensoren 44 ausgebildet, die mit der Innenmantelfläche 20 des Schlauches 14 zusammenarbeiten. Der Drucksensor 44 umfasst hierzu einem Messkörper 46, welcher durch Öffnungen 48 aus dem Gehäuse 22 hervorsteht und so gegen die Innenmantelfläche 20 des Schlauchs 14 andrücken kann, wobei der Messkörper 46 über eine Schraubenfeder 50 mit einem Piezoelement 52 gekoppelt ist, die koaxial zur Messachse 42 verläuft. Der Messkörper 46 ist kugelförmig und hat einen größeren Durchmesser als die Öffnungen 48, so dass der Rand der Öffnung 48 ein Herausfallen des Messkörpers 46 verhindert und zudem das Ausmaß begrenzt, mit dem der Messkörper 46 maximal aus dem Gehäuse 22 hervorstehen kann.

Die Drucksensoren 44 sind somit als piezoelektrische Drucksensoren ausgebildet. Abhängig von der Kraft, die der Messkörper 46 über die Schraubenfeder 50 auf das Piezoelement 52 ausübt, wird in an und für sich bekannter Weise durch nicht eigens gezeigte Ladungsverstärker eine zur Kraft proportionale Spannung als Ausgangssignal des Drucksensors 44 erzeugt.

Wenn sich der Querschnitt des Schlauchs 14 verengt, wird der Messkörper 46 gegen die Federkraft der Schraubenfeder 50 in Richtung auf das Piezoelement 52 gedrückt, wodurch die auf das Piezoelement 52 ausgeübte Kraft erhöht wird. Wenn sich dagegen der Querschnitt des Schlauches 14 erweitert, bewegt sich der Messkörper 46 von dem Piezoelement 52 weg und die Schraubenfeder 50 entspannt sich. Die Längsachse 18 des Detektormolches 16.1 dient dabei als Bezugsachse und die von dem Drucksensor 44 erzeugten Ausgangssignale werden in einen Abstand der Innenmantelfläche 20 des Schlauchs 14 in derjenigen radialen Richtung umgerechnet, in welcher der betreffende Drucksensor 44 misst.

Die Ausgangssignale des Drucksensors 44 werden über eine Sendeeinheit 54 drahtlos weitergegeben, die aus einer Energieversorgung 56, beispielsweise in Form einer Batterie, gespeist wird, welche außerdem von dem Detektormolch 16.1 mitgeführt wird.

Anstelle der piezoelektrischen Drucksensoren 44 können auch andere marktübliche Drucksensoren als Sensoreinheiten 40 verwendet werden, insbesondere kommen hierzu kapazitive oder induktive Drucksensoren in Betracht. Auch können die Sensoreinheiten 40 als berührungslos arbeitenden Abstandssensoren ausgebildet sein. Hierzu können beispielsweise Ultraschallsensoren verwendet werden, wie sie an und für sich bekannt sind.

Insgesamt kann so mit der Sensoreinrichtung 36 der Abstand zwischen der Innenmantelfläche 20 des Schlauchs 14 und der Bezugsachse 18 in mehreren Richtungen radial zur Bezugsachse 18 erfasst werden.

Aus den Ausgangssignalen aller in Umfangsrichtung des Detektormolches 16.1 angeordneten Sensoreinheiten 40 kann für einen bestimmten Messort des Detektormolches 16.1 ein Flächen-Konturbild des Querschnitts der Innenmantelfläche 20 des Schlauches 14 an diesem Messort berechnet werden. Wenn nun der Detektormolch 16.1 über eine Messstrecke durch den Schlauch 14 hindurch bewegt wird und bei dessen Bewegung viele solcher Konturbilder erstellt werden, können diese dann zu einem Querschnittsprofil der Innenmantelfläche 14 des Schlauches 14 entlang der Messtrecke zusammengesetzt werden.

Um den Detektormolch 16.1 durch den Schlauch 14 hindurch zu bewegen, wird dieser auf seiner Stirnseite 24 mit der Dichtlippe 26 mit Druckluft oder einem anderen Schubfluid beaufschlagt. Alternativ kann auf einer Seite des Detektormolches 16.1 ein Unterdruck erzeugt werden. In diesem Fall wirkt die auf der gegenüberliegenden Seite des Detektormolches 16.1 im Schlauch 14 vorhandene Atmosphäre als Schubfluid.

Durch die Druckluft wird die Dichtlippe 26 gegen die Innenmantelfläche 20 des Schlauchs 14 angepresst und der Detektormolch 16.1 in dem Schlauch 14 vorgetrieben. Die Dichtlippe 26 ist Teil eines Fluidschildes 58, der an der ersten Stirnseite des Gehäuses 22 befestigt ist. Bei einer Abwandlung kann die Dichtlippe 26 auch direkt von dem Gehäuse 22 des Detektormolches 16.1 getragen sein.

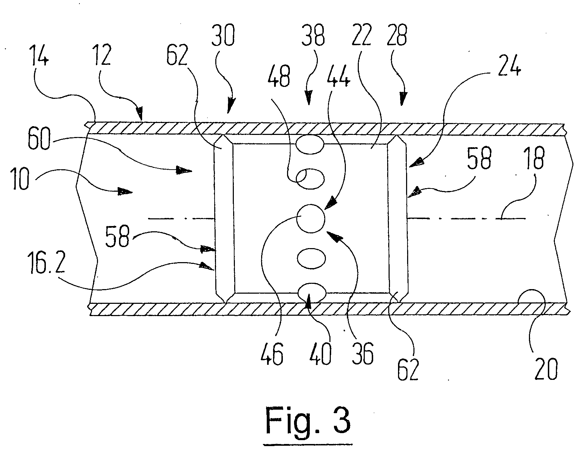

In Figur 3 ist eine Detektoreinheit 10 nach Art eines Molches in Form eines Detektormolches 16.2 gezeigt. Bei dem Detektormolch 16.2 sind Komponenten, die bereits oben erläutert wurden, mit denselben Bezugszeichen versehen.

Bei dem Detektormolch 16.2 ist sowohl auf der ersten Stirnseite 24 als auch auf der zweiten Stirnseite des Gehäuses 22, die mit 60 bezeichnet ist, jeweils eine umlaufende Führungs- und Dichtlippe 62 vorgesehen. Die beiden Führungs- und Dichtlippen 62 sind jeweils Teil eines Fluidschildes 58, von denen eines an der ersten Stirnseite 24 und das andere an der zweiten Stirnseite 60 des Gehäuses 22 befestigt ist. Bei einer nicht eigens gezeigten Abwandlung kann das Gehäuse 22 die Führungs- und Dichtlippen 62 auch direkt tragen.

Die Führungs- und Dichtlippen 62 erfüllen hier eine Doppelfunktion: Einerseits dienen Sie als Dichtlippe, so dass der Detektormolch 16.2 durch ein Schubfluid durch den Schlauch 14 hindurch bewegt werden kann. Andererseits bilden die Führungs- und Dichtlippen 62 auch die Stabilisatoren 32 in den jeweiligen Stabilisierungsabschnitten 28 und 30, durch welche der Detektormolch 16.2 weitgehend koaxial zum Schlauch 14 gehalten wird. Insgesamt kann der Detektormolch 16.2 so in Längsrichtung kürzer gehalten sein als der Detektormolch 16.1.

Da bei dem Detektormolch 16.2 an beiden Stirnseiten 24 und 60 Fluidschilde 58 ausgebildet sind, kann der Detektormolch 16.2 von beiden Seiten mit Druckluft beaufschlagt und nicht nur in einer einzigen Bewegungsrichtung, sondern in einer Hin- und Herbewegung durch den Schlauch 14 geführt werden, wobei in jeder Richtung entsprechend das Querschnittsprofil des Schlauchs 14 erfasst werden kann.

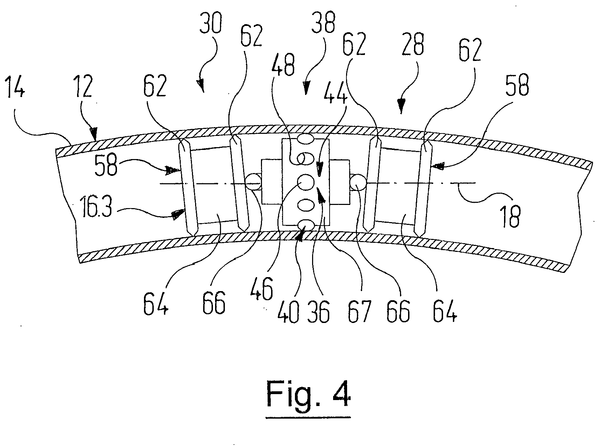

In Figur4 ist eine Detektoreinheit 10 nach Art eines Molches in Form eines Detektormolches 16.3 gezeigt. Bei dem Detektormolch 16.3 sind Komponenten, die bereits oben erläutert wurden, wieder mit denselben Bezugszeichen versehen.

Bei dem Detektormolch 16.3 sind die beiden Stabilisierungsabschnitte 28 und 30 durch Stabilisierungskörper 64 gebildet, die jeweils über Kugelgelenke 66 gelenkig mit einem dazwischen angeordneten Detektorkörper 67 verbunden sind. Der Detektorkörper 67 bildet entsprechend den Detektorabschnitt 38 des Detektormolches 16.3 und umfasst die Sensoreinrichtung 36 mit den Sensoreinheiten 40.

Die Stabilisierungskörper 64 können in ihrem Aufbau beispielsweise dem Detektormolch 16.2 nach Figur 3 entsprechen, wobei keine Sensoreinrichtung 36, jedoch jeweils eine bezogen auf eine Bewegungsrichtung vordere und hinteren Führungs- und Dichtlippe 62 vorhanden ist. Die Stabilisierungskörper 64 bilden zugleich jeweils einen Fluidschild 58 aus, über welche der Detektormolch 16.3 bei Druckluftbeaufschlagung vorgetrieben wird.

Insgesamt ist der Detektormolch 16.3 als eine Art Zug ausgebildet, wodurch insbesondere seine Kurvengängigkeit erhöht ist. Dies ist dadurch veranschaulicht, dass der Detektormolch 16.3 in einem gekrümmten Abschnitt des Schlauchs 14 gezeigt ist. Anstelle der Kugelgelenke 66 können die Stabilisierungskörper 64 auch über flexible Verbindungsstege oder -streifen mit dem Detektorkörper 67 verbunden sein.

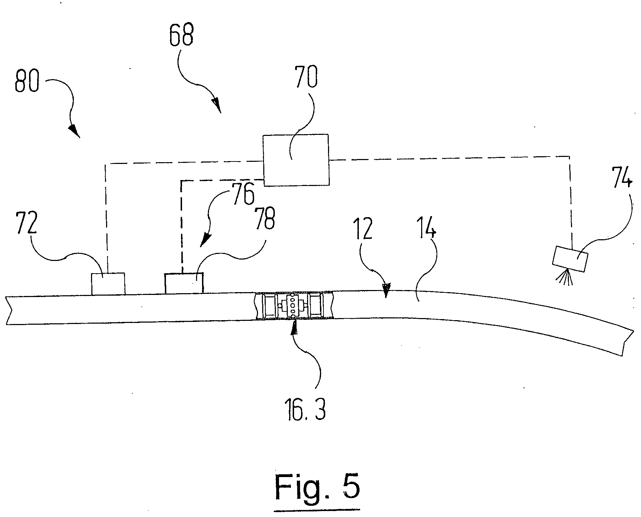

Figur 5 zeigt neben dem Schlauch 14 und dem darin angeordneten Detektormolch 16.3 eine Auswerteeinrichtung 68. Nachfolgend wird allgemein von einem Detektormolch 16 gesprochen; das hierzu Erläuterte gilt sinngemäß für alle oben beschriebenen Detektormolche 16.1, 16.2 und 16.3.

Die Auswerteeinheit 68 umfasst eine Rechnereinheit 70, welche die erhaltenen Daten verarbeitet. Zur Auswerteeinrichtung 68 gehören außerdem mehrere Empfangseinheiten 72, die entlang des Schlauchs 14 angeordnet sind, wobei exemplarisch nur eine einzige solche Empfangseinheit 72 gezeigt ist. Abhängig von der Art der Übertragung und bei einer hinreichenden Senderstärke kann auch eine entfernt von dem Schlauch 14 angeordnete Empfangseinheit 74 ausreichen, um die Daten von allen Positionen des Detektormolchs 16 in dem Schlauch 14 zu empfangen. Ansonsten sind die Abstände zwischen den Empfangseinheiten 72, die entlang des Schlauches 14 angeordnet sind, so gewählt, dass die Daten des Detektormolchs 16 in jeder Position innerhalb des Schlauches 14 empfangen werden können.

Die Sendeeinheiten 54 und die Empfangseinheiten 72 oder 74 können beispielsweise als WLan- oder Bluetooth-System ausgebildet sein. Bei einer Abwandlung können die Sendeeinheiten 54 auch beschreibbare RFID-Transponder und die Empfangseinheiten 72 damit kooperierende RFID-Auslesemodule sein. Die von den Drucksensoren 44 abgegeben Signale werden in diesem Fall auf den Transpondern abgelegt und dann von den Auslesemodulen entlang des Schlauches 14 ausgelesen, wenn sich der Detektormolch 16 daran vorbei bewegt. Gegebenenfalls wird der Inhalt des RFID-Transponders nach jedem Auslesen gelöscht.

Bei einer nicht eigens gezeigten Abwandlung können die Signale des Detektormolches 16 auch über ein Kabel übertragen werden, welches von dem Detektormolch 16 bei seiner Bewegung durch den Schlauch 14 mitgeschleppt wird oder selbst als eine Art Schubstange genutzt wird. Diese Abwandlung kann insbesondere zur Überprüfung von offenen Systemen verwendet werden, in denen kein Schubfluid zur Verfügung steht, um den Detektormolch 16 anzutreiben.

Damit das Querschnittsprofil des Schlauches 14 über die Messstrecke erstellt werden kann, die der Detektormolch 16 in dem Schlauch 14 zurücklegt, müssen die Positionen des Detektormolches 16 in dem Schlauch 14 den ermittelten Flächen-Konturbildern des Querschnitts des Schlauches 16 zugeordnet werden. Hierzu muss die Position des Detektormolches 16 im Schlauch 14 zu jedem Zeitpunkt erfassbar sein. Hierzu ist eine Einrichtung 76 zur Positionserfassung des Detektormolches 16 vorhanden, die z.B. mehrere Erfassungsstationen 78 umfasst, die entlang des Schlauches 14 angeordnet sind und ebenfalls mit der Rechnereinheit 70 kommunizieren. Beispielhaft ist in Figur 5 nur eine einzige solche Erfassungsstation 78 gezeugt. Insgesamt kann auf Einrichtungen zur Positionserfassung zurückgegriffen werden, wie sie an und für sich bekannt sind, weshalb die Einrichtung 76 zur Positionserfassung nur sehr schematisch angedeutet ist und nicht im Detail erläutert werden muss. Beispielsweise kann der Detektormolch 16 einen Permanentmagneten mit sich führen und die Positionsbestimmung erfolgt über Hall-Sensoren entlang des Schlauches 14. Eine andere Möglichkeit ohne Erfassungsstationen 78 besteht in der Erfassung des Schiebedrucks des Schubfluids und eines auf der anderen Seite des Detektormolches 16 aufgebauten Gegendruckes, woraus sich die Position des Detektormolches 16 im Schlauch 14 berechnen lässt.

Die Detektormolche 16 bilden zusammen mit der Auswerteeinrichtung 68 ein System 80 zur Erfassung des Querschnittsprofils einer Fluidleitung 12, welches gegebenenfalls auch die Einrichtung 76 zur Positionserfassung des Detektormolches 16 umfassen kann.

In der oben erläuterten Art und Weise kann mit dem System 80 das Querschnittsprofil einer Fluidleitung 12 erfasst und erstellt werden, die bereits in einer Anlage verbaut ist.

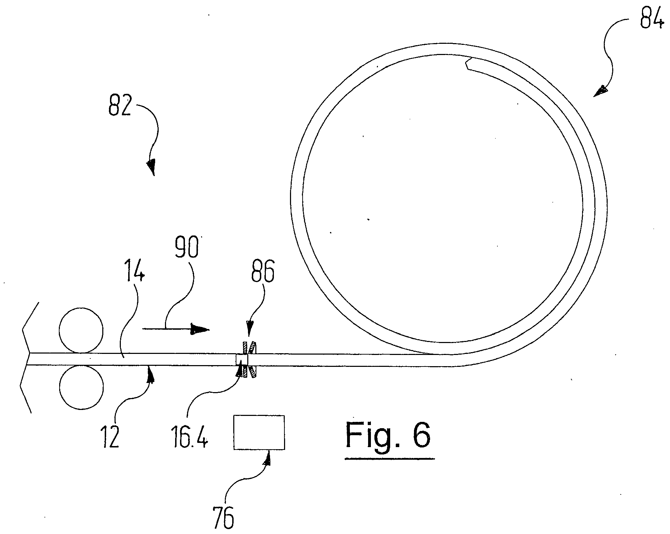

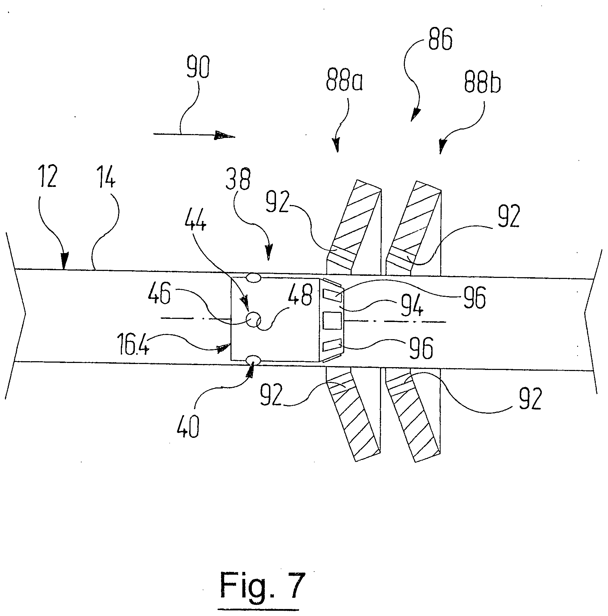

In den Figuren 6 und 7 ist erfindungsgemäß ein abgewandeltes System 82 zur Erfassung des Querschnittsprofils einer Fluidleitung 12 gezeigt. Mit diesem abgewandelten System 82 kann das Querschnittsprofil einer noch nicht verbauten Fluidleitung 12 erfasst werden, die wieder als Schlauch 14 veranschaulicht ist. Auch in den Figuren 6 und 7 sind Komponenten, die bereits oben erläutert wurden, mit denselben Bezugszeichen versehen.

Mit dem System 82 kann das Querschnittsprofil des Schlauches 14 zur Qualitätsüberprüfung beispielsweise bereits unmittelbar nach seiner Fertigung überprüft werden, wenn der Schlauch 14 zum Zwecke des Transports und der Lagerung zu einer Rolle 84 aufgewickelt wird. Darüber hinaus kann der Schlauch 14 jedoch auch von dem Anwender noch vor der Installation in einer Anlage auf seine Güte geprüft werden.

Das System 82 umfasst eine Positioniereinrichtung 86, durch welche ein nochmals abgewandelter Detektormolch 16.4 im Inneren des Schlauchs 14 in einer weitgehend stationären Lage gehalten wird, während der Schlauch 14 gleichsam über den Detektormolch 16.4 hinweg bewegt wird. Somit wird allgemein ausgedrückt der Schlauch 14 gegenüber dem Detektormolch 16.4 bewegt. Es sind hierfür nicht eigens gezeigte Fördermittel vorhanden, um den Schlauch in Längsrichtung zu bewegen.

Die Positioniereinrichtung 86 arbeitet beim vorliegenden Ausführungsbeispiel magnetisch und umfasst hierfür zwei hintereinander angeordnete ringförmige Magnetanordnungen 88a, 88b, durch welche der Schlauch 14 in einer Förderrichtung 90 hindurch geführt wird, die seiner Längsrichtung entspricht, wenn der Schlauch 14 ausgerollt ist. Die Magnetanordnungen 88a, 88b umfassen mehrere in Umfangsrichtung angeordnete Permanentmagnete 92, welche gegenüber einer Horizonten verkippt sind, so dass ihre freie Wirkfläche entgegen der Förderrichtung 90 des Schlauches 14 geneigt ist. Alle Permanentmagnete 92 beider Magnetanordnungen sind mit derselben Polung ausgerichtet.

Der Detektormolch 16.4 weist nun an einem Ende eine umlaufende Fase 94 auf, in welche in Umfangsrichtung als Gegenmagnete zu den Magnetanordnungen 88a, 88b Permanentmagnete 96 eingelassen sind, von denen nur zwei ein Bezugszeichen tragen. Die Polung der Permanentmagnete 96 ist umgekehrt zu den Permanentmagneten 92 der Positioniereinrichtung 86 ausgerichtet, so dass der Detektormolch 16.4 von den Magnetanordnungen 88 abgestoßen wird, wenn er sich im Einflussbereich der Permanentmagnete 92 befindet. Die Permanentmagnete 96 des Detektormolches 16.4 sind derart komplementär zu den Permanentmagneten 92 der Positioniereinrichtung 86 geneigt, dass deren jeweilige Außenflächen parallel zueinander verlaufen.

Wenn sich der Schlauch 14 durch die Magnetanordnungen 88 hindurch bewegt, wird der Detektormolch 16.4 zunächst auf Grund von Reibung durch den Kontakt der Messkörper 46 der Drucksensoren 44 zur Innenmantelfläche 20 des Schlauchs 14 von diesem mitgeführt. Im Einflussbereich der Magnetanordnungen 88 wird der Detektormolch 16.4 dann jedoch durch die wirkenden Abstoßungskräfte daran gehindert, sich mit dem Schlauch 14 zusammen durch die Magnetanordnungen 88 hindurch zu bewegen und der Schlauch 14 wird über den nun in einer weitgehend stationären Position gehaltenen Detektormolch 16.4 hinweg bewegt.

Die in Förderrichtung 90 vorhandene zweite Magnetanordnung 88b ist gleichsam eine Sicherheitsanordnung. Sollte es vorkommen, dass der Detektormolch 16.4 sich entgegen den Abstoßungskräften an der ersten Magnetanordnung 88a vorbei bewegt, so greift die zweite Magnetanordnung 88b und hält den Detektormolch 16.4 in einer zweiten Messposition. Gegebenenfalls kann jedoch auch auf die zweite Magnetanordnung 88b verzichtet werden.

Die tatsächliche Position des Detektormolches 16.4 kann wieder mittels einer Einrichtung 76 zur Erfassung der Position aufgenommen werden, welche hier jedoch nicht eigens gezeigt ist. Die Auswerteeinrichtung 68, welche die Signale des Detektormolchs 16.4 empfängt und auswertet, ist dagegen nur in Figur 6 und dort auch nur schematisch angedeutet.

Bei einer nicht eigens gezeigten Abwandlung können die Magnetanordnungen 88a, 88b auch als Elektromagneten ausgebildet sein.

Die Detektormolche 16 können darüber hinaus ein nicht eigens gezeigtes Gyroskop umfassen, über welches die Ausrichtung des Detektormolches 16 bezogen auf seine Längsachse 18 verfolgt werden kann. Hierüber können die radialen Ausrichtungen der Drucksensoren 44 erfasst werden, so dass insgesamt ein räumlich zugeordnetes Querschnittsprofil der Fluidleitung 12 erstellt werden kann, welches die tatsächliche Lage und Ausrichtung der Fluidleitung 12 im Raum widerspiegelt.

Werden bekannte Systeme zur Erfassung des Außendurchmessers einer Fluidleitung in Kombination mit einem der oben erläuterten Systeme 80 oder 82 verwendet, so kann eine Querschnittsbild der Fluidleitung erstellt werden, durch welches die Materialstärke der Fluidleitung an den Messstellen erfasst werden kann. Hierdurch können zu geringe Materialstärken frühzeitig erkannt werden.

## Patentansprüche

1. System zur Erfassung eines Querschnittsprofils der Innenmantelfläche (20) einer Fluidleitung (12) mit einer Detektoreinheit (16), wobei das System eine Detektoreinheit (16) aufweist, und wobei die Detektoreinheit (16)
a) nach Art eines Molches ausgebildet ist, so dass die Detektoreinheit (16) innerhalb der Fluidleitung (12) relativ zu deren Innenmantelfläche (20) bewegbar ist;
b) eine Bezugsachse (18) definiert;
c) eine Sensoreinrichtung (36) aufweist, wobei die Detektoreinheit eingerichtet ist, um die Sensoreinrichtung mit sich zu führen, wobei durch die Sensoreinrichtung der Abstand zwischen der Innenmantelfläche (20) der Fluidleitung (12) und der Bezugsachse (18) in einer oder mehreren Richtungen radial zur Bezugsachse (18) erfassbar ist,
**gekennzeichnet durch**
d) Fördermittel, mittels welchen die Fluidleitung (12) in ihrer Längsrichtung (90) bewegbar ist, und
e) eine Positioniereinrichtung (86), durch welche die Detektoreinheit (16) im Inneren der Fluidleitung (12) in einer weitgehend stationären Lage haltbar ist, während die Fluidleitung (12) gegenüber der Detektoreinheit (16) bewegt wird.

2. System nach Anspruch 1, **dadurch gekennzeichnet, dass** die Sensoreinrichtung (36) wenigstens einen taktilen Drucksensor (44) umfasst, welcher eingerichtet ist, mit der Innenmantelfläche (20) der Fluidleitung (12) zusammenzuarbeiten.

3. System nach Anspruch 2, **dadurch gekennzeichnet, dass** der Drucksensor (44) ein piezoelektrischer Drucksensor oder ein kapazitiver Drucksensor oder ein induktiver Drucksensor ist.

4. System nach einem der Ansprüche 1 bis 3, **dadurch gekennzeichnet, dass** die Sensoreinrichtung (36) wenigstens einen berührungslos arbeitenden Abstandssensor umfasst.

5. System nach Anspruch 4, **dadurch gekennzeichnet, dass** der berührungslos arbeitende Abstandssensor ein Ultraschallsensor ist.

6. System nach einem der Ansprüche 1 bis 5, **dadurch gekennzeichnet, dass** die Detektoreinheit (16) wenigstens einen Stabilisierungsabschnitt (28, 30) umfasst, mittels welchem die Detektoreinheit (16) im Inneren der Fluidleitung grundsätzlich koaxial zum Querschnitt der Fluidleitung an einem Messort positionierbar ist.

7. System nach Anspruch 6, **dadurch gekennzeichnet, dass** im Stabilisierungsabschnitt (28, 30) Stabilisatoren (32) vorgesehen sind, die in Umfangsrichtung gleichmäßig verteilt sind und jeweils in gleichem Maße aus einem Gehäuse (22) der Detektoreinheit (16) hervorstehen.

8. System nach Anspruch 7, **dadurch gekennzeichnet, dass** die Stabilisatoren (32) als elastomere Gleitstücke (34) oder als federgelagerte Pressrollen oder als umlaufende Führungslippen (62) ausgebildet sind.

9. System nach einem der Ansprüche 6 bis 8, **dadurch gekennzeichnet, dass** die Sensoreinrichtung (36) in einem Detektorabschnitt (38) der Detektoreinheit (16) angeordnet ist, welcher mit dem wenigstens einen Stabilisierungsabschnitt (28, 30) von einem Gehäuse (22) umfasst ist.

10. System nach einem der Ansprüche 6 bis 8, **dadurch gekennzeichnet, dass** die Sensoreinrichtung (36) in einem Detektorabschnitt (38) der Detektoreinheit (16) angeordnet ist, welcher gelenkig mit dem wenigstens einen Stabilisierungsabschnitt (28, 30) verbunden ist, der seinerseits als Stabilisierungskörper (64) ausgebildet ist.

11. System nach einem der Ansprüche 1 bis 10, **dadurch gekennzeichnet, dass** Ausgangssignale der Sensoreinrichtung (36) mittels einer von der Detektoreinheit (16) mitgeführten Sendeeinheit (54) drahtlos an eine Empfangseinheit (72, 74) übertragbar sind, die außerhalb der Fluidleitung (12) anordenbar ist.

12. System nach Anspruch 11, **dadurch gekennzeichnet, dass** die Positioniereinrichtung (86) wenigstens eine außerhalb der Fluidleitung (12) anordenbare Magnetanordnung (88) und die Detektoreinheit hierzu Gegenmagnete (96) umfasst.

13. System nach Anspruch 12, **dadurch gekennzeichnet, dass** die Magnetanordnung (88) der Positioniereinrichtung (86) Permanentmagnete (92) umfasst, welche in Umfangsrichtung der Fluidleitung (12) angeordnet sind.

14. System nach Anspruch 13, **dadurch gekennzeichnet, dass** die Permanentmagnete (92) derart angeordnet sind, dass ihre freie Wirkfläche entgegen der Längsrichtung (90) der Fluidleitung (12) geneigt ist.

## Claims

1. System for recording a cross-sectional profile of the inner circumferential surface (20) of a fluid line (12) with a detector unit (16), the system having a detector unit (16) and the detector unit (16)
a) being formed in the manner of a scraper, so that the detector unit (16) can be moved within the fluid line (12), relative to its inner circumferential surface (20);
b) defining a reference axis (18);
c) having a sensor device (36), the detector unit being configured to carry the sensor device with it, it being possible for the distance between the inner circumferential surface (20) of the fluid line (12) and the reference axis (18) to be recorded by the sensor device in one or more directions radially with respect to the reference axis (18),
**characterized by**
d) conveying means, by means of which the fluid line (12) can be moved in its longitudinal direction (90), and
e) a positioning device (86), by means of which the detector unit (16) in the interior of the fluid line (12) can be kept in a largely stationary position, while the fluid line (12) is moved with respect to the detector unit (16) .

2. System according to Claim 1, **characterized in that** the sensor device (36) comprises at least one tactile pressure sensor (44), which is configured to interact with the inner circumferential surface (20) of the fluid line (12).

3. System according to Claim 2, **characterized in that** the pressure sensor (44) is a piezoelectric pressure sensor or a capacitive pressure sensor or an inductive pressure sensor.

4. System according to one of Claims 1 to 3, **characterized in that** the sensor device (36) comprises at least one distance sensor operating without contact.

5. System according to Claim 4, **characterized in that** the distance sensor operating without contact is an ultrasonic sensor.

6. System according to one of Claims 1 to 5, **characterized in that** the detector unit (16) comprises at least one stabilization section (28, 30), by means of which the detector unit (16) in the interior of the fluid line can in principle be positioned coaxially with respect to the cross section of the fluid line at a measuring location.

7. System according to Claim 6, **characterized in that** stabilizers (32) are provided in the stabilization section (28, 30), are distributed uniformly in the circumferential direction and each project to the same extent out of a housing (22) of the detector unit (16).

8. System according to Claim 7, **characterized in that** the stabilizers (32) are formed as elastomer sliding pieces (34) or as spring-loaded press rollers or as circumferential guide lips (62).

9. System according to one of Claims 6 to 8, **characterized in that** the sensor device (36) is arranged in a detector section (38) of the detector unit (16) which, together with the at least one stabilization section (28, 30), is contained by a housing (22).

10. System according to one of Claims 6 to 8, **characterized in that** the sensor device (36) is arranged in a detector section (38) of the detector unit (16) which is connected in an articulated manner to the at least one stabilization section (28, 30) which, for its part, is formed as a stabilization body (64).

11. System according to one of Claims 1 to 10, **characterized in that** output signals from the sensor device (36) can be transmitted wirelessly, by means of a transmitting unit (54) carried along by the detector unit (16), to a receiving unit (72, 74), which can be arranged outside the fluid line (12).

12. System according to Claim 11, **characterized in that** the positioning device (86) has at least one magnet assembly (88) that can be arranged outside the fluid line (12) and the detector unit comprises mating magnets (96) for this purpose.

13. System according to Claim 12, **characterized in that** the magnet assembly (88) of the positioning device (86) comprises permanent magnets (92), which are arranged in the circumferential direction of the fluid line (12).

14. System according to Claim 13, **characterized in that** the permanent magnets (92) are arranged in such a way that their free active surface is inclined counter to the longitudinal direction (90) of the fluid line (12).

## Revendications

1. Système pour détecter un profil en section transversale de la surface périphérique intérieure (20) d'une conduite de fluide (12) avec une unité de détection (16), le système présentant une unité de détection (16), et l'unité de détection (16) a)
étant formée à la manière d'un écouvillon, de sorte que l'unité de détection (16) peut être déplacée à l'intérieur de la conduite de fluide (12) par rapport à sa surface périphérique intérieure (20) ;
b) définissant un axe de référence (18) ;
c) présentant un dispositif capteur, l'unité de détection étant conçue pour emporter avec elle le dispositif capteur, la distance entre la surface périphérique intérieure (20) de la conduite de fluide (12) et l'axe de référence (18) étant détectable par le dispositif capteur dans une ou plusieurs directions radialement par rapport à l'axe de référence (18),
**caractérisé par**
d) des moyens de transport ou d'entraînement au moyen desquels la conduite de fluide (12) peut être déplacée dans sa direction longitudinale (90) et
e) un dispositif de positionnement (86) au moyen duquel l'unité de détection (16) peut être maintenue dans une position sensiblement stationnaire à l'intérieur de la conduite de fluide (12) pendant que la conduite de fluide (12) est déplacée par rapport à l'unité de détection (16).

2. Système selon la revendication 1, **caractérisé en ce que** le dispositif capteur (36) comprend au moins un capteur de pression tactile (44) qui est réalisé pour coopérer avec la surface périphérique intérieure (20) de la conduite de fluide (12).

3. Système selon la revendication 2, **caractérisé en ce que** le capteur de pression (44) est un capteur de pression piézoélectrique, un capteur de pression capacitif ou un capteur de pression inductif.

4. Système selon l'une des revendications 1 à 3, **caractérisé en ce que** le dispositif capteur (36) comprend au moins un capteur de distance fonctionnant sans contact.

5. Système selon la revendication 4, **caractérisé en ce que** le capteur de distance fonctionnant sans contact est un capteur à ultrasons.

6. Système selon l'une des revendications 1 à 5, **caractérisé en ce que** l'unité de détection (16) comprend au moins une partie de stabilisation (28, 30) au moyen de laquelle l'unité de détection (16) peut être positionnée à un emplacement de mesure à l'intérieur de la conduite de fluide de manière sensiblement coaxiale à la section transversale de la conduite de fluide.

7. Système selon la revendication 6, **caractérisé en ce que** des stabilisateurs (32) sont prévus dans la partie de stabilisation (28, 30), lesquels sont répartis uniformément dans la direction circonférentielle et font saillie chacun dans la même mesure d'un boîtier (22) de l'unité de détection (16).

8. Système selon la revendication 7, **caractérisé en ce que** les stabilisateurs (32) sont réalisés sous la forme de pièces coulissantes en élastomère (34), de rouleaux de pression montés sur ressort ou de lèvres de guidage circonférentielles (62).

9. Système selon l'une des revendications 6 à 8, **caractérisé en ce que** le dispositif capteur (36) est disposé dans une partie de détection (38) de l'unité de détection (16) qui est entourée, avec ladite au moins une partie de stabilisation (28, 30), par un boîtier (22).

10. Système selon l'une des revendications 6 à 8, **caractérisé en ce que** le dispositif capteur (36) est disposé dans une partie de détection (38) de l'unité de détection (16) qui est reliée de manière articulée à ladite au moins une partie de stabilisation (28, 30) qui est elle-même réalisée sous la forme d'un corps de stabilisation (64).

11. Système selon l'une des revendications 1 à 10, **caractérisé en ce que** des signaux de sortie du dispositif capteur (36) peuvent être transmis sans fil à une unité de réception (72, 74), qui peut être disposée à l'extérieur de la conduite de fluide (12), au moyen d'une unité d'émission (54) emportée par l'unité de détection (16).

12. Système selon la revendication 11, **caractérisé en ce que** le dispositif de positionnement (86) comprend au moins un agencement magnétique (88) qui peut être disposé à l'extérieur de la conduite de fluide (12) et l'unité de détection comprend des aimants antagonistes (96) à celui-ci.

13. Système selon la revendication 12, **caractérisé en ce que** l'agencement magnétique (88) du dispositif de positionnement (86) comprend des aimants permanents (92) qui sont disposés dans la direction circonférentielle de la conduite de fluide (12).

14. Système selon la revendication 13, **caractérisé en ce que** les aimants permanents (92) sont disposés de telle sorte que leur surface active libre est inclinée par rapport à la direction longitudinale (90) de la conduite de fluide (12).
